# FASCICULE DE BREVET EUROPEEN

(11) **EP 0 595 723 B1**
(45) Date de publication et mention de la délivrance du brevet: **31.07.1996**
(21) Numéro de dépôt: 93402646.9
(22) Date de dépôt: 28.10.1993
(51) Int. Cl.: C09C 3/04, C09C 1/02

(54) **Procédé de préparation de charges pigmentaires à base minérale, charges pigmentaires obtenues par ledit procédé et leurs utilisations**
Verfahren zur Herstellung von pigmentären Füllstoffen auf Mineralbasis, so erhaltene pigmentäre Füllstoffe und deren Verwendungen
Process for manufacturing pigmentary fillers on mineral basis, thus obtained pigmentary fillers and their uses

(30) Priorité: 29.10.1992 FR 9212945
(43) Date de publication de la demande: 04.05.1994
(73) Titulaire: PROVENCALE S.A. (Société Anonyme), F-83174 Brignoles Cédex (FR)
(72) Inventeur: Corby, Charles, F-60260 Lamorlaye (FR); Colom, René, F-66750 Saint-Cyprien-Village (FR); Baiget, Georges, F-66010 Perpignan (FR)
(74) Mandataire: Ramey, Daniel

(56) Documents cités:
- DE-A- 3 246 232
- FR-A- 2 118 348
- FR-A- 2 526 061
- GB-A- 892 746
- US-A- 4 123 591
- US-A- 4 264 372
- DATABASE WPI Week 7924, Derwent Publications Ltd., London, GB; AN 79-44987B & JP-A-54 056 083 (SHISEIDO) 4 Mai 1979

## Description

L'Invention est relative à un procédé de préparation de charges pigmentaires à base minérale.

De nombreuses industries, telles que la papeterie, l'industrie des peintures, l'industrie des encres, la transformation des matières plastiques, utilisent des charges pigmentaires destinées à conférer au produit fini un aspect opaque, ainsi que, généralement, d'autres qualités variant selon le produit considéré.

Dans l'industrie papetière, par exemple, on utilise, pour la fabrication du papier, différents types de mélanges en suspension aqueuse, dénommés sauces de couchage,qui ont pour but, d'améliorer l'aspect et l'état de surface du papier, en particulier pour augmenter sa brillance et son imprimabilité.

Les sauces de couchages sont des mélanges de liant(s) tels que des latex et de charges pigmentaires minérales (carbonate de calcium broyé ou précipité, kaolin, talc) en milieu aqueux. Certains adjuvants comme des dispersants, des azurants optiques, des antimousses, des insolubilisants, des lubrifiants, etc ... sont ajoutés. D'autres pigments comme le dioxide de titane, le blanc satin, les sulfates de baryum ou de calcium, ou les pigments plastiques peuvent aussi être ajoutés pour améliorer les propriétés superficielles du papier.

Une sauce de couchage doit généralement contenir juste assez d'eau pour rendre la composition fluide car il est coûteux d'évaporer de grandes quantités d'eau du papier couché. Si possible, la sauce contient au moins 50% et de préférence au moins 60% de matières sèches.

Pour être utilisable dans une sauce de couchage, une charge minérale doit avoir, sauf exception, un degré de blancheur suffisant (supérieur à 80% de la blancheur du sulfate de baryum à 457 nm), une répartition granulométrique de 0 à 10 µm au maximum, (la granulométrie moyenne se situant entre 0,2 et 2 µm) et un degré d'agglomération minimum des particules.

Les charges minérales les plus employées dans les sauces de couchage sont actuellement les kaolins et les carbonates de calcium broyés, ainsi que leurs mélanges.

Le kaolin confère au papier un excellent état de surface et une bonne imprimabilité.

Le kaolin dit de couchage est en général obtenu par délitage à l'eau du minerai kaolinique et par classement des particules fines. Eventuellement, le kaolin peut subir un traitement de blanchiment. Certains kaolins sont en outre délaminés, c'est à dire subissent un traitement mécanique violent en vue de séparer les empilements de lamelles pour modifier le facteur de forme (rapport diamètre/épaisseur). Ces kaolins délaminés donnent des suspensions aqueuses plus visqueuses, qui ne peuvent être préparées qu'à moins de 70% de matière sèche.

Les kaolins sont livrés sous forme de suspensions aqueuses, dénommées "slurries", contenant moins de 73% (en général de 68 à 72%) de matière sèche en suspension dans de l'eau en présence de dispersants, ou sous forme de poudre que le papetier empâte pour obtenir une suspension à moins de 73% (de 60 à 72%) d'extrait sec.

Le carbonate de calcium améliore en particulier la viscosité de la sauce, la pénétration des encres, la blancheur de la couche, mais, pur, ne permet pas en général de conférer une bonne brillance du papier, ni une bonne brillance d'impression.

Le carbonate de calcium employé en couchage du papier est principalement obtenu par broyage en milieu aqueux de calcite, de craie, ou de marbre, de pureté et blancheur suffisantes.

Chaque type de charge apportant ses propres caractéristiques, les papetiers procèdent généralement au mélange du kaolin et du carbonate de calcium broyés, dans des proportions variables suivant les qualités de papiers à fabriquer. De tels mélanges sont par exemple décrits dans le Brevet US 4 264 372.

La Demande Française 2 526 061 décrit la fabrication de charges pigmentaires par microbroyage d'un mélange de talc et de calcite en poudre en suspension dans l'eau.

Ces mélanges peuvent poser des problèmes de compatibilité entre les adjuvants chimiques utilisés par chaque producteur de minéraux. En outre, bien que l'on parvienne à obtenir des mélanges carbonate de calcium/kaolin homogènes en phase aqueuse, une séparation partielle des deux constituants intervient souvent lors du séchage, ce qui produit des irrégularités dans la couche obtenue.

D'autre part, un des principaux problèmes rencontrés actuellement dans l'industrie papetière consiste en l'amélioration simultanée de la brillance vierge et de la brillance d'impression.

Afin d'améliorer la brillance vierge et la brillance d'impression ou d'autres caractéristiques du papier (voluminosité par exemple), on utilise parfois des polymères (pigments plastiques ou charges organiques) sous forme de dispersion. Or, le rajout de cette dispersion dont la teneur en matière sèche est inférieure à 60% diminue l'extrait sec de la sauce. Les pigments plastiques présentent en outre l'inconvénient d'être d'un coût élevé, et de n'apporter d'amélioration sensible que s'ils constituent au minimun 3% du total des matières de charge employées dans les sauces de couchage de l'art antérieur.

La seule technique actuellement connue pour fabriquer des sauces de couchage d'extrait sec supérieur à 75% permettant d'obtenir des brillances papier et encre suffisantes, consiste à utiliser un mélange de pigments plastiques en dispersion auquel est souvent ajouté du latex, et de carbonate de calcium, dans lequel tout ou partie du carbonate de calcium (suivant la teneur finale en matière sèche souhaitée) est ajouté sous forme de poudre que l'on empâte en utilisant l'eau du pigment plastique et éventuellement celle du latex. Cependant, l'agitation de ce mélange lors de l'empâtage en présence du pigment plastique et, le cas échéant du latex, provoque la formation de mousse, ce qui pose des problèmes pour l'application de cette technique à l'échelon industriel.

La présente Invention s'est fixé pour but l'obtention de préparations de pigments broyés propres à être utilisés comme pigments de charge, en particulier dans l'industrie papetière, et ne présentant pas les inconvénients des préparations de pigments de charge connues dans l'art antérieur.

La présente Invention a pour objet un procédé de préparation de pigments de charge à base minérale, lequel procédé est caractérisé en ce que l'on procède au cobroyage d'un minéral compact, et d'un minéral lamellaire et/ou d'un pigment plastique, en suspension aqueuse, en présence d'au moins un auxiliaire de broyage comprenant un agent dispersant.

Selon un mode de mise en oeuvre préféré du procédé conforme à l'Invention, le minéral compact est du carbonate de calcium.

Selon un autre mode de mise en oeuvre préféré du procédé conforme à l'Invention, le minéral lamellaire est choisi parmi le groupe comprenant le kaolin, le talc et le mica.

Selon un autre mode de mise en oeuvre préféré du procédé conforme à l'Invention, le pigment plastique est un polystyrène en dispersion aqueuse.

Selon encore un autre mode de mise en oeuvre préféré du procédé conforme à l'Invention, on procède, préalablement au cobroyage, à un délaminage préalable du minéral lamellaire en présence d'un agent dispersant approprié.

Le délaminage du minéral lamellaire peut être effectué par un traitement mécanique connu en lui-même, par exemple par broyage ou broyage:attrition sur un broyeur à microbilles, un broyeur colloldal à disques ou à cones, etc... Différents procédés de délaminage tels que ceux mentionnés par exemple par BAUDET et al. [Mines et Carrières-Industrie Minérale-Les Techniques, pp 21-29, juin 1992] peuvent être employés dans le cadre de la présente Invention.

L'agent dispersant utilisé pour le délaminage du minéral lamellaire peut être par exemple un polyacrylate, de préférence un polyacrylate de sodium homo- ou copolymère ou un polyphosphate, tel que l'hexamétaphosphate de sodium.

Selon encore un autre mode de mise en oeuvre préféré de la présente Invention, l'auxiliaire de broyage comprend en tant qu'agent dispersant un polyacrylate tel qu'un polyacrylate de sodium homo- ou copolymère.

Avantageusement, on additionne en outre, préalablement au broyage, ou au cours de celui-ci, un agent de protection colloïdale approprié ; ledit agent de protection colloïdale est de préférence une PVP (polyvinylpyrolidone) de bas poids moléculaire.

Pour la mise en oeuvre du procédé de cobroyage conforme à l'Invention, les différents constituants à cobroyer sont avantageusement associés dans les proportions dans lesquelles ils sont usuellement employés dans les sauces de couchage, à savoir, entre 20 et 95% de minéral compact, entre 0 et 80% de minéral lamellaire et/ou entre 0 et 20% de pigment plastique. De préférence, le mélange comprend au moins 70% de carbonate de calcium. Lorsqu'un pigment plastique est utilisé, la quantité dudit pigment plastique est préférentiellement comprise entre 2 et 10%.

Avantageusement, le procédé de cobroyage conforme à l'Invention comprend les étapes suivantes :
- cobroyage du minéral lamellaire et/ou du pigment plastique, et du minéral compact, en présence d'un agent dispersant, jusqu'à obtention de particules d'une granulométrie moyenne de 2,5 µm environ.
- poursuite du cobroyage après addition d'un agent de protection colloldale, jusqu'à obtention de la granulométrie finale souhaitée.

Si l'on souhaite obtenir un cobroyat comprenant un minéral lamellaire, ces étapes sont précédées d'une étape de délaminage du minéral lamellaire en présence d'un agent dispersant.

On obtient par exemple de la sorte un slurry d'extrait sec supérieur à 73%, par exemple 75%, de viscosité acceptable pour la fabrication de sauces de couchage (par exemple inférieure à 400 mPa/s, déterminée par mesure Brookfield à 100 tours/mn au bout d'une semaine) et stable pendant au moins une semaine.

Si l'on souhaite obtenir un mélange comprenant à la fois un minéral lamellaire et un pigment plastique, il est possible, ou bien de cobroyer les trois constituants (minéral compact, minéral lamellaire et pigment plastique), dans les conditions définies ci-dessus, ou bien de rajouter le pigment plastique en cours de cobroyage, ou bien encore de rajouter le pigment plastique après le cobroyage du minéral compact et du minéral lamellaire.

On peut également procéder au cobroyage d'un minéral compact et d'un pigment plastique, en dispersion. Dans ce cas on obtient des slurries fluides de très haute concentration, aptes entre autres à la préparation de sauces de couchage d'extrait sec supérieur ou égal à 75%, sans obligation de rajouter du minéral compact sous forme de poudre, et assurant une efficacité maximale du pigment plastique en suspension dans la couche.

Lorsque ces sauces de couchage sont utilisées en papeterie, il en résulte une brillance particulièrement élevée des couches obtenues.

L'Invention a également pour objet des préparations de pigments de charge obtenues par le procédé conforme à l'Invention.

Ces préparations sont des cobroyats, qui présentent une teneur pondérale en particules plus petites que 2 µm comprise entre 20 et 100%, en général entre 75 et 90 %.

Selon un mode de réalisation préféré des préparations de pigment de charge conforme à l'invention, leur teneur pondérale en particules plus petites que 1 µm est comprise entre 40 et 75%, de préférence entre 50 et 65%.

Avantageusement, les préparations selon l'invention peuvent en outre contenir du latex en quantité appropriée, de préférence entre 2 et 12% en poids sec par rapport aux pigments.

Le procédé conforme à l'Invention permet par rapport aux procédés de broyage connus dans l'art antérieur, d'obtenir, de manière inattendue, une modification de la morphologie et de la structure superficielle des particules qui entraîne des propriétés nouvelles ; en particulier, lorsque des charges pigmentaires obtenues par le procédé de l'Invention sont utilisées pour l'obtention de sauces de couchage pour le papier et le carton, on obtient simultanément une excellente brillance du support et de l'impression, sans maculage excessif En outre, les couches obtenues à partir des cobroyats conformes à la présente Invention ont généralement une structure plus homogène que celles des couches généralement obtenues à partir des mélanges kaolin/carbonate de calcium connus dans l'art antérieur, où des irrégularités apparaissent souvent lors du séchage.

Un autre avantage de la présente Invention est de permettre l'utilisation pour la fabrication de pigments de couchage, de certaines qualités de kaolin, qui jusqu'à présent étaient considérées comme trop grossières pour être utilisables dans une sauce de couchage. Certains gisements peuvent ainsi être exploités pour servir le marché de la papeterie.

Les charges pigmentaires conformes à l'Invention peuvent également être utilisées dans d'autres industries, par exemple, les peintures et encres, les colles et adhésifs, et après séchage, par exemple par atomisation, pour la fabrication des matières plastiques ou des élastomères.

La présente Invention sera mieux comprise à l'aide du complément de description qui va suivre, qui se réfère à des exemples de mise en oeuvre du procédé conforme à l'Invention.

### EXEMPLE 1 : DELAMINAGE DU MINERAL LAMELLAIRE

Cette opération s'effectue par attrition, par exemple au moyen d'une machine WENCO à une cellule hexagonale de capacité 8 litres.

Dans cette cellule on introduit successivement :
. 1313 g d'eau
. 4,4 g d'agent dispersant (hexamétaphosphate de Na, type CALGON® PTH de BENCKISER)
. 2200 g de pellets cylindriques (Polyamide, référence "BMNO pur" de ATOCHEM)
. 1641 g de minéral lamellaire (kaolin) grossier (granulométrie : 0 à 40 µm)

On attritionne à une vitesse de 540 tours/mn pendant 3 à 4 heures puis on filtre à travers un tamis de maille 1 mm (récupération des pellets).

Le niveau du délaminage peut, si nécessaire être contrôlé par diffraction laser (par exemple par un appareil CILAS HR 850).

### EXEMPLE 2 : PREPARATION DE LA PULPE

On entend par "pulpe" l'empâtage de l'ensemble des produits à broyer avec l'aide d'un agent dispersant.

On introduit successivement dans un becher plastique de 5 litres (sous agitation continue) :
. 1471,4 g de suspension à 50% du kaolin délaminé et filtré comme décrit à l'exemple 1.
. 753 g d'eau
. 10,4 g de dispersant exprimé en poids sec (par exemple : polyacrylate de Na copolymère type POLYSEL® S de BASF)
. 3912,8 g de CO₃Ca grossier (granulométrie 0-50 µm)

Cette suspension présente les caractéristiques suivantes :
. Extrait sec : 74 à 75 %
. Viscosité Brookfield 100 rpm : 400 à 800 mPa/s
. pH : 8,3 à 8,9

### EXEMPLE 3 : COBROYAGE

Cette opération comprend deux phases distinctes :
- Prébroyage
- Broyage fin

Elle s'effectue par exemple dans un broyeur à double enveloppe type DYNO-MILL type "KDL Pilot", à cylindre fixe et impulseur tournant, et dont le corps broyant est constitué de billes d'oxyde de Zirconium, de préférence d'un diamètre compris entre 0,8 et 1 millimètre (par exemple du type ER 120 A de la Société SEPR), d'un poids de 1200 g environ. Le volume total du corps broyant est de 1100 cc, tandis que la chambre de broyage a un volume de 1400 cc. La vitesse circonférentielle de broyage est d'environ 10 m/s. La sortie du broyeur est munie d'un séparateur de maille 100 µ (séparation du corps broyant).

On introduit dans ce broyeur la pulpe obtenue comme décrit à l'exemple 2 ; pendant le broyage, la pulpe circule en continu (de préférence avec un débit de recyclage 20 à 22,5 litres/h), dans le broyeur, dont la température interne est maintenue à environ 65°C.

### PREBROYAGE

L'agent de broyage (polyacrylate de Na copolymère, type POLYSEL® S de BASF) est introduit en discontinu dans cette suspension en fonction de sa viscosité (en principe toutes les 5 minutes).

Cette opération est poursuivie jusqu'à l'obtention d'une granulométrie inférieure à quelques microns pour 50% des particules (D₅₀ compris entre 2 et 3 µm).

La consommation en agent de broyage pendant cette phase est en général de 0,3% (poids sec) par rapport au poids sec des particules.

### BROYAGE FIN

A ce stade on introduit, outre l'agent de broyage proprement dit (le même que celui utilisé lors du cobroyage) un agent de protection colloïdale spécifique (PVP de bas poids moléculaire, type KOLLIDON® 12 PF de BASF). Ces deux produits sont ajoutés simultanément, dans le rapport 40:60, en discontinu comme ci-dessus.

L'opération de broyage est arrêtée lorsque la finesse souhaitée est obtenue (D₅₀ compris entre 0,5 et 0,8 µm).

La consommation en auxiliaires (agent de broyage et colloide protecteur) pendant cette phase est comprise entre 0,5 et 0,6% (poids sec) du poids sec des particules.

### EXEMPLE 4 : VARIANTE : AJOUT DE PIGMENT PLASTIQUE

On utilise comme pigment plastique un polystyrène en dispersion aqueuse et d'une granulométrie moyenne adéquate (0,3 µ), par exemple du type STYROFAN® EL 4502 de BASF.

La dose de pigment plastique utilisée est de 3% (poids sec) du total pigment + charges minérales.

Une comparaison entre les performances des couches obtenues en utilisant comme sauces de couchage a été effectuée :
- Colonne 1 : un mélange CO₃Ca/kaolin (80/20) de l'art antérieur, à titre de témoin ;
- Colonne 2 : un cobroyat CO₃Ca/kaolin (82/15) conforme à l'Invention ;
- Colonne 3 : un cobroyat CO₃Ca/kaolin/pigment plastique (82/15/3) conforme à l'Invention ;

Les 3 sauces comprennent en outre les mêmes adjuvants. Les quantités des différents constituants sont exprimées en pourcentage, en poids.

Dans les trois cas, la sauce a une teneur en matière sèche de 69%, et un pH de 9 environ

Le couchage est effectué à 18 g/m² sur support non précouché.

Les caractéristiques de couche (IGT (mesure de la résistance à l'arrachage) blancheur, brillance du papier, et brillance de l'encre) sont déterminées après calandrage.

Les résultats sont exprimés dans le Tableau I ci-dessous.

**TABLEAU I**

| | 1 | 2 | 3 |
|---|---|---|---|
| CO₃Ca broyé (90% < 2 µ) | 80 | | |
| Kaolin brésilien | 20 | | |
| Co-broyés 82 : 15 : 0 | | 100 | |
| 82 : 15 : 3 | | | 100 |
| CMC* moyenne viscosité | 0,4 | 0,4 | 0,4 |
| Acronal® D 6-86 BASF (en sec.) | 11 | 11 | 11 |
| Urecoll® S BASF (en sec) | 1 | 1 | 1 |
| Blankophor® PSG BAYER (liquide) | 1 | 1 | 1 |
| ITG 3906 sec (cm/s) | 78 | 88 | 86 |
| humide (%) | 78 | 66 | 70 |
| Blancheur (457 nm) | 85,0 | 85,1 | 85,3 |
| Brillance papier 75° (%) | 67,5 | 61,5 | 67,0 |
| Brillance encre 45° (%) | 47,5 | 57,0 | 61,5 |
| Δ Brillances | - 20,0 | - 4,5 | - 5,5 |

| | | | |
|---|---|---|---|
| * Carboxymethylcellulose | | | |

## Revendications

1. Procédé de préparation de pigments de charge à base minérale, caractérisé en ce que l'on procède au cobroyage, en milieu aqueux, d'un minéral compact, et d'un minéral lamellaire et/ou d'un pigment plastique, en présence d'au moins un auxiliaire de broyage comprenant au moins un agent dispersant.

2. Procédé selon la revendication 1, caractérisé en ce que le minéral compact est du carbonate de calcium.

3. Procédé selon l'une quelconque des revendications 1 ou 2, caractérisé en ce que le minéral lamellaire est choisi parmi le groupe comprenant le kaolin, le talc et le mica.

4. Procédé selon l'une quelconque des revendications 1 à 3, caractérisé en ce que le pigment plastique est un polystyrène, en dispersion aqueuse.

5. Procédé selon l'une quelconque des revendications 1 à 4, caractérisé en ce que l'on procède, préalablement au cobroyage, à un délaminage préalable du minéral lamellaire en présence d'un agent dispersant approprié.

6. Procédé selon l'une quelconque des revendications 1 à 5, caractérisé en ce que l'auxiliaire de broyage comprend un agent dispersant choisi parmi le groupe constitué par les polyacrylates et les polyphosphates de sodium.

7. Procédé selon la revendication 6, caractérisé en ce que l'on additionne en outre, préalablement au broyage, ou au cours de celui-ci, un agent de protection colloïdale approprié.

8. Procédé selon la revendication 7, caractérisé en ce que ledit agent de protection colloïdale est une PVP de bas poids moléculaire.

9. Procédé selon l'une quelconque des revendications 1 à 8, caractérisé en ce qu'il comprend les étapes suivantes :
- cobroyage du minéral lamellaire et/ou du pigment plastique, et du minéral compact, en présence d'un agent dispersant jusqu'à obtention de particules d'une granulométrie moyenne de 2,5 µm environ.
- poursuite du cobroyage après addition d'un agent de protection colloïdale, jusqu'à obtention de la granulométrie finale souhaitée.

10. Préparations de pigments de charge caractérisées en ce qu'elles sont obtenues par le procédé selon une quelconque des revendications 1 à 9.

11. Préparations de pigments de charge selon la revendication 10, caractérisées en ce que leur teneur pondérale en particules plus petites que 2 µm est comprise entre 20 et 100%.

12. Préparations de pigments de charge selon la revendication 11, caractérisées en ce que leur teneur pondérale en particules plus petites que 1 µm est comprise entre 40 et 75%.

13. Préparations de pigments de charge selon la revendication 11, caractérisées en ce qu'elles comprennent en outre entre 2 et 12% en poids sec de latex.

14. Préparations de pigments de charge, caractérisées en ce qu'elles sont obtenues par séchage d'une préparation selon l'une quelconque des revendications 10 à 13.

15. Utilisation de préparations de pigments de charge selon une quelconque des revendications 10 à 13 pour l'obtention de sauces de couchage des papiers et cartons.

16. Utilisation de préparations de pigments de charge selon une quelconque des revendications 10 à 14 pour la fabrication des peintures, encres, colles et adhésifs, matières plastiques et élastomères.

## Patentansprüche

1. Verfahren zur Herstellung von Chargenpigmenten auf Mineralbasis, dadurch gekennzeichnet, daß man in wässerigem Medium eine gemeinsame Mahlung eines Kompaktminerals, eines Schichtminerals und/oder eines Kunststoffpigments in Gegenwart von zumindest einem Mahlhilfsmittel, umfassend zumindest ein Dispergiermittel, durchführt.

2. Verfahren nach Anspruch 1, dadurch gekennzeichnet, daß das Kompaktmineral Calciumcarbonat ist.

3. Verfahren nach einem der Ansprüche 1 oder 2, dadurch gekennzeichnet, daß das Schichtmineral aus der Gruppe bestehend aus Kaolin, Talk und Glimmer ausgewählt ist.

4. Verfahren nach einem der Ansprüche 1 bis 3, dadurch gekennzeichnet, daß das Kunststoffpigment ein Polystyrol in wässeriger Dispersion ist.

5. Verfahren nach einem der Ansprüche 1 bis 4, dadurch gekennzeichnet, daß man vor dem gemeinsamen Mahlen eine Vorentschichtung des Schichtmaterials in Gegenwart eines geeigneten Dispergiermittels durchführt.

6. Verfahren nach einem der Ansprüche 1 bis 5, dadurch gekennzeichnet, daß das Mahlhilfsmittel aus einem Dispergiermittel, ausgewählt aus der Gruppe bestehend aus Natriumpolyacrylaten und -polyphosphaten, besteht.

7. Verfahren nach Anspruch 6, dadurch gekennzeichnet, daß man unter anderem vor dem Mahlen oder währenddessen ein geeignetes kolloidales Schutzmittel zusetzt.

8. Verfahren nach Anspruch 7, dadurch gekennzeichnet. daß das kolloidale Schutzmittel ein PVP von niedrigem Molekulargewicht ist.

9. Verfahren nach einem der Ansprüche 1 bis 8, dadurch gekennzeichnet, daß es die folgenden Stufen umfaßt:
- Gemeinsames Mahlen des Schichtminerals und/oder Kunststoffpigments und des Kompaktminerals in Gegenwart eines Dispergiermittels bis zum Erhalt von Teilchen mit einer mittleren Korngröße von etwa 2,5 µm.
- Fortsetzen des gemeinsamen Mahlens nach Zusatz eines kolloidalen Schutzmittels bis zum Erreichen der erwünschten endgültigen Korngröße.

10. Zubereitungen von Chargenpigmenten, dadurch gekennzeichnet, daß sie durch das Verfahren nach einem der Ansprüche 1 bis 9 erhalten werden.

11. Zubereitungen von Chargenpigmenten nach Anspruch 10, dadurch gekennzeichnet, daß deren Gewichtsanteil an Teilchen, die kleiner als 2 µm sind, zwischen 20 und 100% liegt.

12. Zubereitungen von Chargenpigmenten nach Anspruch 11, dadurch gekennzeichnet, daß deren Gewichtsanteil an Teilchen, die kleiner als 1 µm sind, zwischen 40 und 75% liegt.

13. Zubereitungen von Chargenpigmenten nach Anspruch 11, dadurch gekennzeichnet, daß sie unter anderem zwischen 2 und 12% Trockengewicht Latex enthalten.

14. Zubereitungen von Chargenpigmenten, dadurch gekennzeichnet, daß sie durch Trocknung einer Zubereitung nach einem der Ansprüche 10 bis 13 erhalten werden.

15. Verwendung von Zubereitungen von Chargenpigmenten nach einem der Ansprüche 10 bis 13, um Beschichtungsbrühen für Papiere und Kartons zu erhalten.

16. Verwendung von Zubereitungen von Chargenpigmenten nach einem der Ansprüche 10 bis 14 zur Herstellung von Anstrichen, Farben, Klebstoffen und Haftmitteln, Kunststoffmaterialien und Elastomeren.

## Claims

1. Process for preparing mineral-based loading pigments, characterised in that a compact mineral and a lamellar mineral and/or a plastic pigment are ground together in aqueous medium in the presence of at least one grinding auxiliary comprising at least one dispersing agent.

2. Process according to claim 1, characterised in that the compact mineral is calcium carbonate.

3. Process according to claim 1 or 2, characterised in that the lamellar mineral is chosen from the group comprising kaolin, talc and mica.

4. Process according to any of claims 1 to 3, characterised in that the plastic pigment is a polystyrene in aqueous dispersion.

5. Process according to any one of claims 1 to 4, characterised in that, before the grinding operation, the lamellar mineral is first subjected to prior delamination in the presence of a suitable dispersing agent.

6. Process according to any one of claims 1 to 5, characterised in that the grinding auxiliary comprises a dispersing agent selected from the group comprising the sodium polyacrylates and polyphosphates.

7. Process according to claim 6, characterised in that a suitable colloidal protecting agent is also added prior to the grinding or during the grinding process.

8. Process according to claim 7, characterised in that the colloidal protecting agent is a low molecular weight PVP.

9. Process according to any one of claims 1 to 8, characterised in that it comprises the following steps:
- joint grinding of the lamellar mineral and/or plastic pigment and the compact mineral in the presence of a dispersing agent until particles with a mean particle size of about 2.5 µm are obtained,
- continuing the joint grinding after the addition of a colloidal protecting agent until the desired final particle size is achieved.

10. Preparations of loading pigments, characterised in that they are obtained by the process according to any one of claims 1 to 9.

11. Preparations of loading pigments according to claim 10, characterised in that their content by weight of particles smaller than 2 µm is between 20 and 100%.

12. Preparations of loading pigments according to claim 11, characterised in that their content by weight of particles smaller than 1 µm is between 40 and 75%.

13. Preparations of loading pigments according to claim 11, characterised in that they further contain between 2 and 12% by dry weight of latex.

14. Preparations of loading pigments, characterised in that they are obtained by drying a preparation according to any one of claims 10 to 13.

15. Use of preparations of loading pigments according to any one of claims 10 to 13 for obtaining liquors for couching paper and cardboard.

16. Use of preparations of loading pigments according to any one of claims 10 to 14 for the production of paints, inks, glues and adhesives, plastics and elastomers.
